# EUROPEAN PATENT SPECIFICATION

(11) **EP 3 149 278 B1**
(45) Date of publication and mention of the grant of the patent: **30.01.2019**
(21) Application number: 15798716.5
(22) Date of filing: 29.05.2015
(51) Int. Cl.: F01C 21/08, F01C 1/18, F04C 2/18, F04C 18/18, F02B 33/38, B29C 67/00, B29C 70/46, B29C 70/34, B29C 65/48, B32B 5/02, B32B 5/26, B32B 7/12, B32B 15/14, B32B 15/20, B32B 37/12, B32B 37/18, F04C 2/107, F04C 2/08, F04C 2/14, F04C 2/12

(54) **COMPOSITE ROTARY COMPONENT**
VERBUNDSTOFFROTATIONSKOMPONENTE
COMPOSANT ROTATIF COMPOSITE

(30) Priority: 30.05.2014 US 201462005357 P; 29.08.2014 US 201462043525 P; 04.12.2014 US 201462087281 P
(43) Date of publication of application: 05.04.2017
(73) Proprietor: Eaton Corporation, Cleveland, OH 44122 (US)
(72) Inventor: WILLIAMS, Kelly, Ann, South Lyon, MI 48178 (US); EYBERGEN, William, Nicholas, Macomb County, MI 48045 (US); WRIGHT, Bradley, Karl, Dayton, OH 45458 (US); FORTINI, Matthew, James, Livonia, MI 48154 (US); SWARTZLANDER, Matthew, Gerald, Battle Creek, MI 49014 (US)
(74) Representative: Schwan Schorer & Partner mbB
(86) International application number: PCT/US2015/033354
(87) International publication number: WO 2015/184371

(56) References cited:
- WO-A1-2004/053296
- JP-A- H0 458 093
- JP-A- H0 458 093
- JP-A- 2011 112 019
- JP-A- 2011 112 019
- US-A- 3 918 838
- US-A1- 2008 170 958
- US-A1- 2013 075 526

## Description

### PRIORITY CLAIM

This application is being filed on 29 May 2015, as a PCT International Patent Application and claims priority to U.S. Patent Application Serial Number 62/087,281 filed on 04 December 2014, claims priority to U.S. Patent Application Serial Number 62/043,525 filed on 29 August 2014, and claims priority to U.S. Patent Application Serial Number 62/005,357 filed on 30 May 2014..

### TECHNICAL FIELD

This present disclosure relates to rotary components and assemblies constructed from rotary components that may be utilized in rotary equipment applications, for example, volumetric expansion, compression devices, gear trains, pumps, and mixing devices. A rotary assembly according to the preamble of claim 1 is disclosed in JP 2011 112019 A.

### BACKGROUND

Rotors are a commonly used in applications where it is desirable to compress or move a fluid and where it is desired to remove energy from the fluid. In one example, a compressor or supercharger utilizes a pair of rotors to increase airflow into the intake of an internal combustion engine. In another example, a volumetric fluid expander includes a pair of rotors that expand a working fluid to generate useful work at an output shaft. Rotary components are also utilized in other applications, such as in gear trains, pumps, and mixing devices. In many such applications, it is known to provide machined or cast rotary components having a unitary construction with a solid cross-sectional area.

### SUMMARY

The present teachings generally include a rotor assembly including a plurality of rotor sheets or layers mounted to a shaft. In one aspect, each of the rotor sheets or layers can have a first side and a second opposite side separated by a first thickness. Each rotor sheet or layer may also be provided with a central opening extending between the first and second sides through which the shaft extends. In yet another aspect, the rotor sheets or layers can be provided with a plurality of lobes extending away from the central opening and each of the lobes has a lobe opening extending between the first and second sides. The plurality of rotor sheets or layers can be stacked and secured together to form the rotor assembly such that at least one of the first and second sides of one rotor sheet is adjacent to and in contact with at least one of the first and second sides of another rotor sheet. In one example, which does not fall within the scope of the claims, the rotor sheets or layers can be stacked directly upon each other such that the entirety of one side of one rotor sheet is entirely covered by an adjacent rotor sheet or layer. In one example which does not fall within the scope of the claims, the rotor sheets or layers can be rotationally stacked to form a helical rotor such that one rotor sheet or layer does not entirely cover the adjacent rotor sheet or layer. The teachings also include a volumetric fluid expander and a compressor or supercharger including a pair of the above described rotors. According to the invention, the plurality of rotor sheets or layers is a rotor ply formed from a single continuous tow of fibers stitched together to define the plurality of lobes, the root sections, and/or the central opening.

In one aspect of the teachings, the rotary component or rotor layers are each formed from a tow formed from a bundle of filamentary material, such as a carbon fiber tow. The tow of continuous fibers can be stitched together with a stitching material to form the shape of the rotor. For example, the central opening can be defined by arranging the tow with a generally circular center segment and each lobe can be defined by arranging the tow with at least first lobe segment and a second lobe segment. The root segments between each lobe can also be formed by the tow. In one example, each root segment is stitched to the center segment. In one example, the fibers in the first and second lobe segments generally extend from the center segment towards a tip portion of each lobe, the fibers in the center segment extend generally circumferentially around the central opening, and at least a portion of the fibers in the root segments extend generally parallel to a portion of adjacent fibers in the center segment. The first and second lobe segments can also be arranged to form a lobe opening within each lobe. The tow can also be arranged to form a rotor or rotary component with any number of desired lobes or teeth, such as three lobes or teeth or four lobes or teeth.

The present teachings also include processes for making a laminated rotor assembly. In one step of a process, a plurality of rotor sheets is provided. In one example, the rotor sheets can be pre-cured composite rotor sheets including a fiber substrate and a polymeric material. In one example, the rotor sheets can be uncured composite rotor sheets including a fiber substrate and a polymeric material. In one example, the rotor sheets include a fiber substrate without a polymeric material. According to the invention a plurality of rotor layers or plies is provided that are formed from a tow of continuous filamentary material. In one step, the rotor sheets or layers can be stacked together to form either a straight rotor or a helical rotor. The process may include applying an adhesive between each rotor sheet or layer as the sheets or layers are being stacked onto each other such that the rotor sheets or layers are secured together once the adhesive has cured. The adhesive may be a polymeric material. The process may also include heating and/or compressing the rotor stack to cure the polymeric material and/or adhesive. The process may also include placing the sheets, layers, or plies into a mold cavity and injecting a resin material into the mold cavity to define the rotor or rotary component. In one step, the rotor is mounted to a shaft to form the laminated rotor assembly. The shaft may be burred to better engage the shaft with the stacked rotor sheets. The process may also include applying an abradable coating to the rotor as well.

The above features and advantages and other features and advantages of the present teachings are readily apparent from the following detailed description of the best modes for carrying out the present teachings when taken in connection with the accompanying drawings.

### BRIEF DESCRIPTION OF THE DRAWINGS

Figure 1 is a front view of a first example of a composite rotor sheet in accordance with the principles of the present disclosure.
Figure 2 is a side view of the rotor sheet shown in Figure 1.
Figure 3 is a front view of a second example of a composite rotor sheet in accordance with the principles of the present disclosure.
Figure 4 is a side view of the rotor sheet shown in Figure 2.
Figure 5 is a schematic side view of a first stack configuration of the rotor sheets shown in Figures 1-4.
Figure 6 is a schematic side view of a second stack configuration of the rotor sheets shown in Figures 1-4.
Figure 7 is a perspective view of a shaft onto which the rotor sheets of Figures 1-4 may be mounted.
Figure 8 is a perspective view of an assembled rotor utilizing a plurality of the rotor sheets of Figures 1-2 and the shaft of Figure 7.
Figure 9 is a perspective view of an assembled rotor utilizing a plurality of the rotor sheets of Figures 3-4 and the shaft of Figure 7.
Figure 10 is a schematic view of a vehicle having a fluid expander and a compressor in which rotor assemblies of the type shown in Figures 8 and 9 may be included.
Figure 11 is a flow diagram describing a first process for making the rotors of Figures 8 and 9.
Figure 12 is a flow diagram describing a second process for producing a laminated rotor.
Figure 13 is a schematic perspective view of a shaft onto which the rotor plates of Figures 1-4 may be mounted.
Figure 14 is a schematic end view of the shaft shown in Figure 13 in a die forming process.
Figure 15 is a perspective view of a rotor ply formed from a tow of continuous filamentary material in accordance with the present invention.
Figure 16 is a top view of a portion of the rotor ply shown in Figure 15.
Figure 17 is a perspective view of a rotor formed from multiples of the rotor ply shown in Figure 15.
Figure 18 is a flow diagram describing a third process for producing a rotor.

### DETAILED DESCRIPTION

Various examples will be described in detail with reference to the drawings, wherein like reference numerals represent like parts and assemblies throughout the several views. Reference to various examples does not limit the scope of the claims attached hereto. Additionally, any examples set forth in this specification are not intended to be limiting and merely set forth some of the many possible examples for the appended claims. Referring to the drawings wherein like reference numbers correspond to like or similar components throughout the several figures.

### Rotor Construction

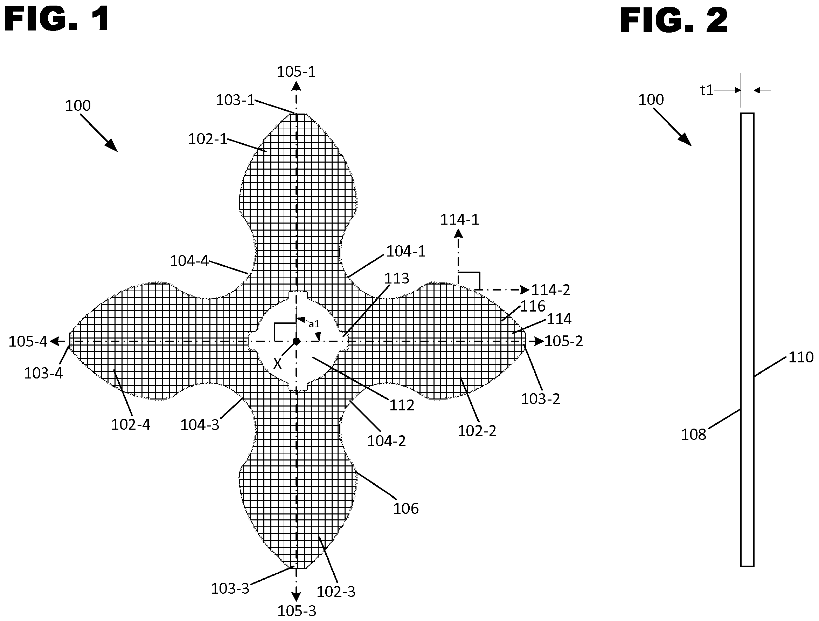

A first example of the present teachings, which does not fall within the scope of the claims, includes a composite rotor sheet 100 that can be used to form a rotor 30 shown at Figures 1-2. As shown, rotor sheet 100 can have four radially spaced lobes 102-1, 102-2, 102-3, 102-4 (collectively referred to as lobes 102) extending away from a central axis X along a longitudinal axis 105-1, 105-2, 105-3, 105-4 to a respective tip portion 103-1, 103-2, 103-3, 103-4 (collectively tips 103). In the example of Figures 1-2, the longitudinal axes 105-1 and 105-3 are coaxial while the longitudinal axes 105-2 and 105-4 are also coaxial.

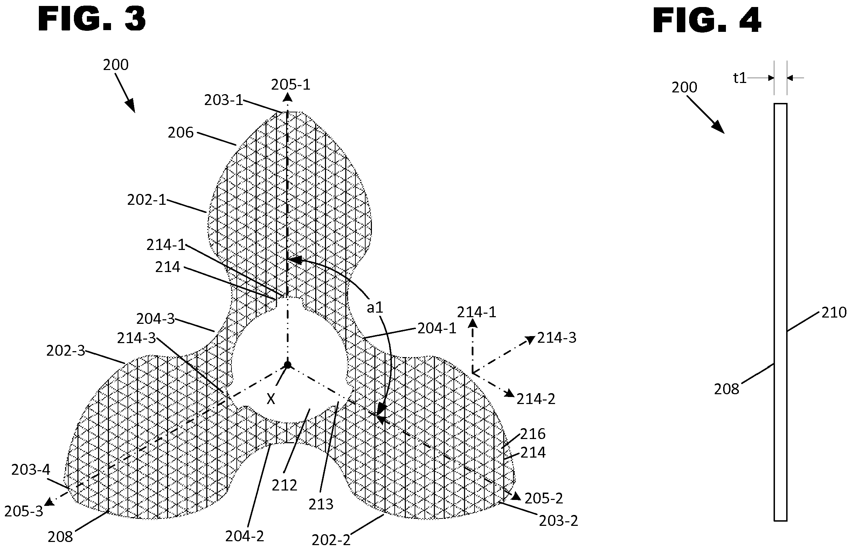

As shown, the lobes 102 are equally spaced apart at a first separation angle a1. In the example shown, the separation angle a1 is about 90 degrees such that axes 105-1/105-3 are orthogonal to axes 105-2/105-4. Although four lobes are shown, it should be understood in light of the disclosure that fewer or more lobes may be provided with corresponding separation angles, for example, two lobes with a separation angle of 180 degrees, three lobes with a separation angle of 120 degrees as shown in Figures 3-4 (discussed later), five lobes with a separation angle of 72 degrees, and six lobes with a separation of 60 degrees. When stacked together to form a rotor 30, the central axis X of each rotor sheet 100 can be coaxial with axis X1 or the rotor 30.

As shown, the lobes 102 are joined together by adjacent root portions 104-1, 104-2, 104-3, 104-4 (collectively referred to as root portions 104). In the particular example shown, the lobes 102 can have or define a convex outline or perimeter nearest the tips 103 and the root portions 104 have or define a concave outline or perimeter. Taken together, the lobes 102 and the root portions 104 can define an outer perimeter 106 of the rotor sheet 100. It is noted that lobes 102 are not limited to being defined as convex and can have a shape defined by straight or concave lines. Likewise, the root portions 104 are not limited to being defined as concave and can have a shape defined by straight or convex lines. In one example, the outer perimeter 106 of the rotor sheets 100, 200 at the lobes 104 is defined in the form of an involute shape such that adjacent rotary components 30 can operate as co-acting gears.

With reference to Figure 2, each rotor sheet 100 also has a first side 108 and a second side 110 separated by a first thickness t1. In one example, the thickness t1 is about 0.25 millimeters (mm). However, it should be noted that other thicknesses may be used; for example, thicknesses between about 0.15 mm and about 1 mm. Each sheet 100 is also shown as being provided with a central opening 112 extending between the first and second sides 108, 110. The central opening 112 can be centered on the central axis X.

In the example, composite rotor sheet 100 can be formed from a fiber reinforced composite material including a fiber substrate 114 having a plurality of fibers (i.e. a filamentary material) and a polymeric material 116, such as a thermoset or thermoplastic material. Non-limiting examples of suitable fibers/filaments are carbon fibers (low, medium, and high modulus), boron fibers, fiberglass fibers, aramid fibers (e.g. KEVLAR®), and combinations thereof. In one example, the polymeric material 116 can be about 50 percent, by weight, of the composite rotor sheet 100.

Other type of materials, such as metal fibers (e.g. steel, aluminum, titanium, etc.), may be used as well. The fiber substrate 114 may also include fibers of different material types or of all the same type. Using different material types within composite rotor sheets 100 may be preferable to alternating composite rotor sheets 100 with non-composite rotor plates (e.g. all metal rotor plates) in that expansion rates can be more easily managed in the former. However, in certain applications it can be shown to be advantageous to include metal rotor plates stacked between composite rotor sheets 100. In such an application, the plastic resin 116 can be directed such that the non-composite rotor plates or sheets are encapsulated by the polymeric material 116.

One example of a suitable polymeric material 116 is a plastic resin, for example, an epoxy resin. Some examples of thermosetting materials usable for the polymeric material 116 are vinylester, phenolic, and bismaleimide (BMI) materials. Some examples of thermoplastic materials usable for the polymeric material are polyamides (e.g. polyphthalamide), polyaryletherketones, and nylon. Other materials can be provided that they provide adequate thermal stability and adequate strength. In certain applications where operating temperatures are a concern, a polymeric material 116 may be chosen that has a glass transition temperature that is at least as high or higher than the operating temperature. In one example, the polymeric material 116 can be an epoxy resin having a glass transition temperature of 160° C. In one example, the polymeric material 116 can be pre-impregnated in the fiber substrate to form a "pre-preg" sheet from which individual rotor sheets may be cut. In one example, the polymeric material 116 can be provided in the form of thermoplastic fibers that are woven with or into the fiber substrate 114 to form a pre-preg sheet from which the rotor sheets can be cut or formed. Alternatively, the thermoplastic fibers can be provided as chopped fibers in a non-pre-preg approach.

The fiber substrate 114 may be formed from a plurality of fibers that can be arranged in a variety of respective orientations to provide adequate hoop strength to the rotor. In one example each of the plurality of fibers can extend along a single orientation axis to form a unidirectional substrate (i.e. a "0" substrate). In one example, some of the fibers can be oriented orthogonally to the remaining fibers to form a bidirectional substrate (i.e. a "0/90" substrate). The fibers may also be aligned along three different axes to form a tri-axial weave (i.e. a "0/+45/-45" substrate) and may also be aligned along four different axes to form a quad-axial weave (i.e. a "0/+45/-45/90" weave). It will be appreciated in light of the disclosure that many other orientations are possible without departing from the present teachings.

The plurality of fibers in the fiber substrate 114 may also be are woven or non-woven (e.g. chopped fibers and unidirectional fibers). Non-limiting examples of some types of weaves that may be used for the fiber substrate 114 are a plain weave, a twill weave, a diagonal weave, and a harness satin weave. The fiber substrate 114 may also be provided with a uniform distribution of fibers or may be constructed such that the fibers are strategically located and oriented so that it can be shown to strengthen the rotor sheet 100 in high stress areas, such as the root portions 104. Also, individual rotor sheets 100, 200 can be formed by stamping, die-cutting, laser cutting, or water jet cutting the sheets 100, 200 from a larger sheet of substrate material.

As schematically shown in Figure 1, the fiber substrate 114 can be formed from a plurality of fibers that are woven together in a bidirectional arrangement to result in at least some of the fibers extending along a first orientation axis 114-1 and at least some of the fibers extending along a second orientation axis 114-2. In one example, the first orientation axis 114-1 is parallel to axes 105-1/105-3 and the second orientation axis 114-2 is parallel to axes 105-2/105-4 such that at least some of the fibers extend along the longitudinal axis 105 of each lobe 102. Such an arrangement can be shown to increase the strength of the lobes 102 in the longitudinal direction 105 which can be desirable as considerable forces exist in this direction when the rotor sheet 100 is being rotated about the central axis X when part of a fully formed rotor 30.

The fibers can also be oriented to control growth in certain directions via reduced resin leakage in a desired direction as there is typically less thermal expansion along the direction of orientation of the fibers. For example, a 0/90 weave controls expansion in both the 0 and 90 directions while a unidirectional tape would only control the expansion in the 0 direction.

With reference to the rotor sheet 100 shown at Figure 1, it can be seen that the lobes 102 can be entirely covered with material such that the only opening that extends through the thickness t1 of the rotor is the central opening 112. This type of lobe may be referred to as a solid lobe and a rotor sheet 100 having such lobes 102 may be referred to as a solid-lobe rotor sheet. However, the rotor sheet 100 may be provided with one or more openings within each lobe. This type of lobe may be referred to as a hollow lobe and a rotor sheet having such lobes may be referred to as a hollow-lobe rotor sheet 100.

Referring to Figures 3-4, a second example, which does not fall within the scope of the claims, of a composite rotor sheet 200 is shown. Many similarities exist between the first and second examples 100, 200 and the description for the first example 100 is thus applicable to the second example 200. Where similar features exist, similar reference numbers are utilized. However, the corresponding feature of the second example is designated with a 200 series reference number rather than the 100 series reference numbers utilized for the first example 100. Accordingly, this section will be limited to the differences between the first and second examples.

The rotor sheet 200 is different from the rotor sheet 100 in two primary ways. First, and as discussed previously, the rotor sheet 200 can be provided with three lobes 202 rather than four lobes. Accordingly, the separation angle a1 between the lobes in the rotor sheet 200 can be 120 degrees instead of 90 degrees. As can also be seen at Figure 3, the shape and geometry of each individual lobe 202 and root portion 204 can be different from that shown in the first example.

The second primary difference is that the rotor sheet 200 is schematically shown as being provided with a woven tri-axial fiber substrate 214 having fibers that can be oriented at 0 degrees, +60 degrees, and -60 degrees such that at least some of the fibers in the substrate 214 generally align with the length of each lobe 202. Accordingly, at least some of the fibers extend along a first orientation axis 214-1 (0 degrees), some of the fibers extend along a second orientation axis 214-2, and some of the fibers extend along a third orientation axis. In one example, the first orientation axis 214-1 can be parallel to longitudinal axis 205-1, the second orientation axis 214-2 can be parallel to longitudinal axis 205-2, and the third orientation axis 214-3 can be parallel to longitudinal axis 205-3 such that at least some of the fibers can extend along the longitudinal axis 205 of each lobe 202. As with the first example, this arrangement can be shown to increase the strength of the lobes 202 in the longitudinal direction 205, which can be desirable as considerable forces exist in this direction when the rotor sheet 200 is being rotated about the central axis X.

In one example, the substrate 214 is provided with fibers extending along at least one orientation axis direction and the rotor sheets 200 are stacked and rotated with respect to each other such that the orientation axis alternately aligns with the longitudinal axis 205 of at least one of the formed lobes of the rotary component 30. For example, the fiber orientation axis of a first rotor sheet 200 could be aligned with the first lobe 202-1, the fiber orientation axis of a second adjacent rotor sheet 200 could be aligned with the second lobe 202-2, the fiber orientation axis of a third adjacent rotor sheet 200 could be aligned with the third lobe 202-3, and so on. In light of the present teachings, it should be understood that the individual rotor sheets 200 (or 100) can be formed identically and simply rotated before being stacked onto an adjacent rotor sheet.

For example, unidirectional fiber (0 orientation) substrates 214 can be provided for each rotor sheet 200 and alternatively stacked (i.e. each sheet rotated 120 degrees with respect to the adjacent sheet) such that the fibers of one third of the sheets 200 in the stack align along axis 205-1, the fibers of one third of the sheets 200 in the stack align along axis 205-2, and the fibers of one third of the sheets 200 in the stack align along axis 205-3. With respect to the four lobe rotor sheet 100 example of Figure 1, unidirectional fiber (0 orientation) substrates 114 can be provided for each rotor sheet 100 and alternatively stacked (i.e. each sheet rotated 90 degrees with respect to the adjacent sheet) such that the fibers of half of the sheets 100 in the stack align along axis 105-1/105-3 and the fibers of the other half of the sheets 100 in the stack align along axes 105-2/105-4. It can be appreciated in light of the disclosure that other fiber orientation and stacking configurations are also possible without departing from the teachings presented herein.

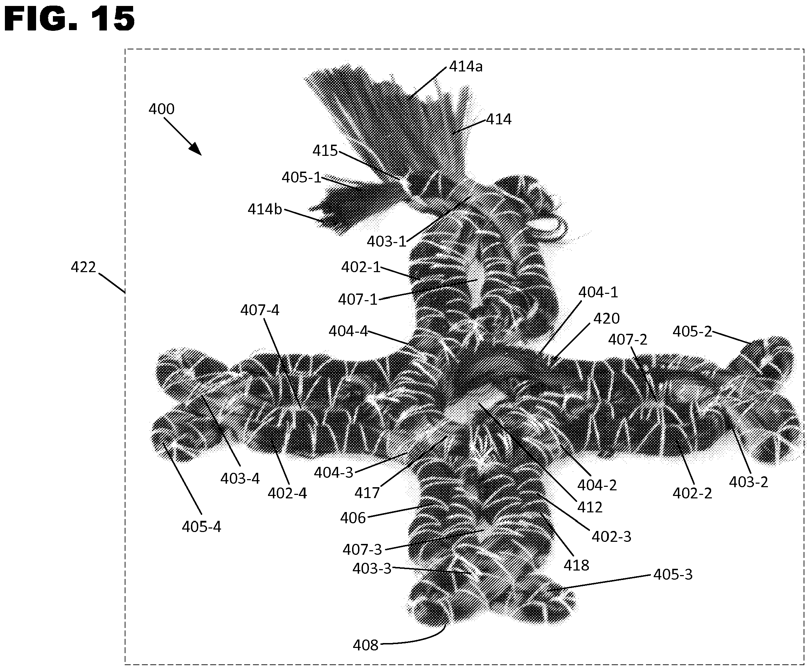

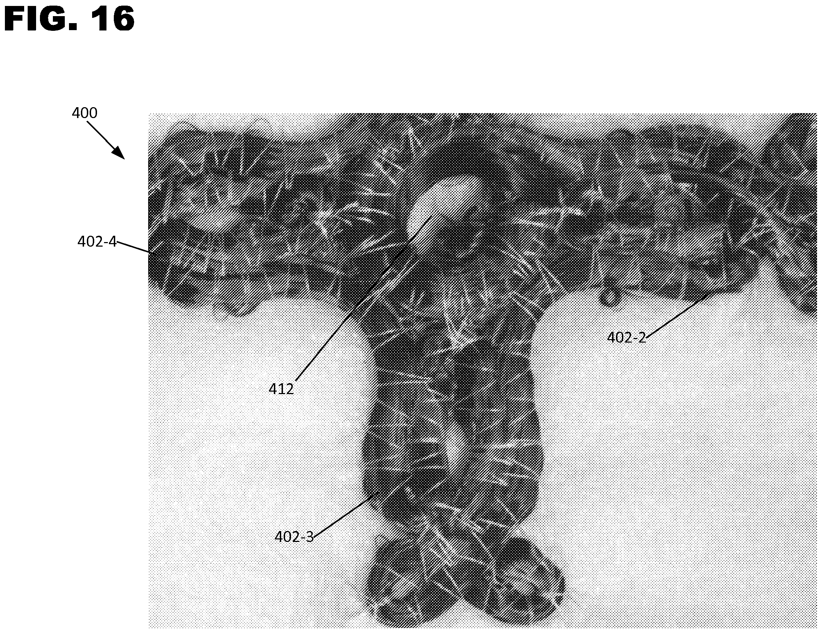

Referring to Figures 15-17, a third example, according to the invention, of a composite rotor sheet 400 is shown. In the third example of the present teachings, the composite rotor sheet 400 may be referred to as a rotor layer and/or a rotor ply. Many similarities exist between the first and third examples 100, 400 and the description for the first example 100 is thus applicable to the third example 400. Where similar features exist, similar reference numbers are utilized. However, the corresponding feature of the second example is designated with a 400 series reference number rather than the 100 series reference numbers utilized for the first example 100. Accordingly, this section will be limited to the differences between the first and third examples.

The rotor sheet 400 is different from the rotor sheet 100 primarily in that the rotor layer or ply 400 is formed from a tow of fibers 414 bound by stitching 415 to define the plurality of lobes 402 (402-1, 402-2, 402-3, 402-4), the tip sections 403 (403-1, 403-2, 403-3, 403-4), the root sections 404 (404-1, 404-2, 404-3, 404-4), and the central opening 412. As shown, the ply 400 includes four lobes 402 formed from a single continuous tow of fibers 414, but any other number of lobes may be used, as described for the other aspects of the present teachings. Many suitable materials exist for the fibers of the tow 414, for example, carbon fiber, fiberglass (e.g. S-2 glass, E-glass, etc.), thermoplastic fibers, metal fibers, and aramid fibers (e.g. KEVLAR). In one aspect, the tow 414 includes a plurality of individual fibers numbering between about 12,000 (12K) and about 610,000 (610K) fibers, although fewer or more may be used. In a preferred example, tow 414 includes 60,000 (60K) individual carbon fibers.

As can be seen at Figure 15, the stitching process starts and stops at the first lobe 402-1, where it can be seen that a first end 414a of the tow and a second end 414b of the tow are stitched together. Between the first and second ends 414a, 414b, the tow 414 can be oriented as desired to define the lobes 402, the root portions 404, and the central opening 412. As shown, the central opening 412 is defined by arranging the tow 414 with one or more generally arc-shaped or circular center segments 417. In one example, the fibers in the center segments 417 extend generally circumferentially around the central opening 412. The central opening 412 can be defined by a continuous segment that circumscribes the entire opening 412 or can be defined by a plurality of center segments 417 that collectively define the central opening 412.

In one example, the lobes 402 are defined by arranging the tow 414 with lobe segments 418 that generally extend from the center segment towards the tip portion 403 (403-1, 403-2, 403-3, 403-4) of each lobe 402. In the examples shown, each lobe 402 is provided with four lobe segments 418. The lobe segments 418 can be stitched together in pairs to define a lobe opening 407 (407-1, 407-2, 407-3, 407-4) within each lobe 402. To accommodate the stitching process, each lobe 402 may be formed with a tail portion 405 (405-1, 405-2, 405-3, 405-4) to allow the tow to be doubled back to form the next lobe segment 418. Stitching can be increased at the junction of the tip portion 403 and the lobe segment 418 such that the tail portions 405 can be cut off after the stitching process while leaving the tip portions 405 fully intact.

The tow 414 can also be oriented to define the root segments 420 extending between each of the lobes 402. In the example shown, the root segments 404 are stitched to the center segments 417 and at least a portion of the fibers in the root segments 420 can extend generally parallel to a portion of fibers in the adjacent center segment 417. In one example, a single continuous tow 414 is provided in which the center segments 417, lobe segments 418, tail portions 405, and root segments 420 are part of the same tow 414. In one example, the rotor ply 400 is formed by orienting the tow 400 with alternation among the segments and portions 405, 417, 418, and 420. For example, a section of the tow 414 may include a lobe segment 418 that adjoins a root portion 420 which in turn adjoins a lobe segment of a another lobe 402.

In one example, the tow 414 can be stitched by the stitching material 515 onto a substrate 422. Substrate 422 can be a carrier film, a fabric, or any other type of material that aids in stitching the tow 414 into the desired shape. In one example, the substrate 422 is a backing film with a low melting temperature and the film can melt away during the rotor molding process. In one example, the substrate 422 is a structural fabric that can be shown to add additional strength and stiffness. Examples of structural fabrics are woven or non-woven carbon fiber and fiberglass fabrics of the type already discussed for the rotor sheet materials. The use of fabrics that remain present in the rotor after formation of the rotor can also be used to increase the loft or bulk of each individual ply 400 so as to reduce the total number of required plies 400. After stitching, the substrate 422 can be trimmed to the shape of the rotor ply 400.

The stitching material 515 can also be selected to be a low melt material that melts into the overall structure during the molding process. In one aspect, the spacing/density and location of the stitching is controlled to achieve a desired stiffness of the rotor ply 400 prior to the molding process. Increased stitching at a particular location will generally result in increased stiffness at that location and a decrease in the ability of the ply to conform to another shape (i.e. higher stitching density decreases "drapability"). At the intersection of the rotor lobe ends 403 and the tail portions 408, additional stitching is provided such that when the tail portions 408 are cut away from the lobe ends 403, the lobe segments 418 forming the ends 403 remain joined by the stitching 415.

Advantageously, the moment of inertia or rotational inertia of the rotor sheets 100, 200 (and thus the assembled rotor 30) can be substantially reduced as compared to a solid material metal rotor. In the example shown, the rotational inertia of the rotor sheets 100, 200 when made from carbon fiber can be about 35% less than a solid rotor made from aluminum having the same geometric configuration. This reduced rotational inertia of the rotor sheets 100, 200 can have several benefits. For example, a rotor, gear, or other type of rotary component formed from sheets 100, 200 can be shown to accelerate more quickly and induce less wear on interconnected components, such as a clutch. Additionally, the rotor sheets 100, 200, as disclosed, can be configured to be shown to have enough hoop strength to withstand applications where the rotor 30 is spinning at speeds of 20,000 revolutions per minute or greater.

Even further advantages can be realized utilizing the rotor layers 400 to form the assembled rotor 430. For example, less waste is produced because the tow 414 can be arranged to the specific shape of each portion of the rotor layer 400. This reduces overall material costs, in comparison to approaches that require cutting the rotor sheet to a desired shape. Cost savings are also realized in that fiber tows are generally less costly than woven sheet-type products. As cutting fibers can significantly reduce the strength of the material (in some instances up to fifty percent), the avoidance of cutting further enhances the strength of the rotor layers 400 and thus the rotor 430. Even when the lobe segments 417 are oriented to define an opening 407 in each lobe 402, no significant change in properties occurs as the fibers in the lobe segments 417 remain uncut and are fully intact. Additional strength advantageous are achieved because the fibers in the tow 414 are strategically oriented to provide increased root strength and hoop strength in the circumference of the rotor. The result of utilizing a stitched tow 414 to form the rotor layers 400 results in a relatively low cost and lightweight rotor 430 with little shrinkage and good dimensional stability at the inner and outer diameters of the rotor 430.

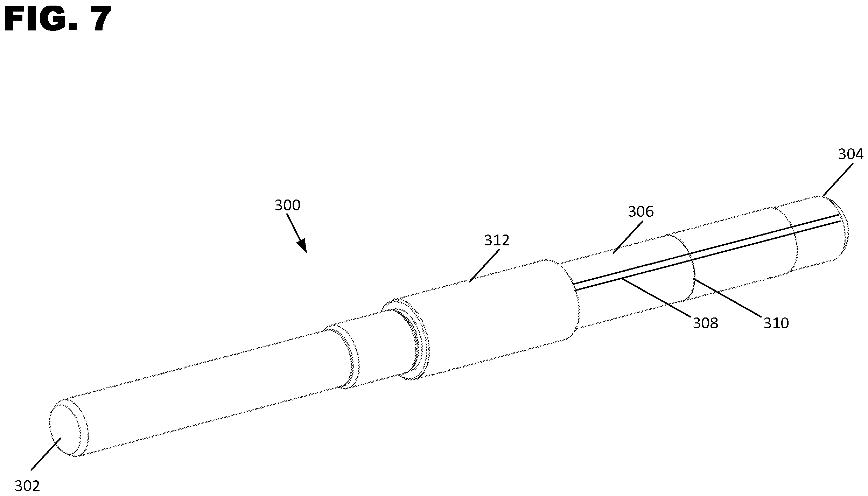

Referring to Figure 7, a rotor shaft 300 is shown in accordance with the present teachings. Depending on application, the rotor shaft may be made from a composite material, aluminum, or steel (e.g. low carbon heat treated steel, stainless steel, etc.). The shaft 300 can extend through the central openings 112, 212 of the rotor sheets and, once the rotor sheets 100, 200 are stacked and secured to the shaft 300, enables power to be transmitted between the staked rotor sheets and an input or output device. As shown, rotor shaft 300 includes a first end 302 and a second end 304. The shaft 300 may be provided with a mounting section 306 which serves as a location for the rotor sheets 100, 200 to be mounted.

The rotor shaft 300 may also be provided with one or more securing features that can function to secure the rotor sheets 100, 200 onto the rotor shaft 300. For example, knurling 308 may be provided on the surface of the mounting section 306 to increase the bond between the plastic resin 116, 206 of the rotor sheets 100, 200 and the rotor shaft 300. In the examples shown, knurling 308 is provided as a plurality of longitudinal recess in the surface of the mounting section 306 which lock the rotor sheets in the radial direction onto the rotor shaft 300. Another securing feature that may be provided is a step portion 312 located at one end of the mounting section 306. As shown, the step section has a larger diameter than the mounting section 306 and thus prevents the rotor sheets 100, 200 from sliding longitudinally on the rotor shaft towards the first end 302.

The mounting section 306 may also be provided with one or more circumferential grooves 310 into which the plastic resin 116, 206 can flow, thereby locking the rotor sheets 100, 200 in the axial direction onto the rotor shaft 300. It can be appreciated in light of the disclosure that the location of the circumferential groove 310 can be chosen to allow for thermal expansion between the rotor sheets 100, 200 and the shaft 300 to occur. One example of a suitable location is adjacent the step portion 312. The rotor shaft 300 may also be provided with splines that engage with keyway features 113, 213 of the rotor sheets 100, 200. The splines on the shaft 300 may be provided with the same number of splines as there are keyway features 113 and may also have the same shape. The splines may also extend along the full length of the mounting section 306.

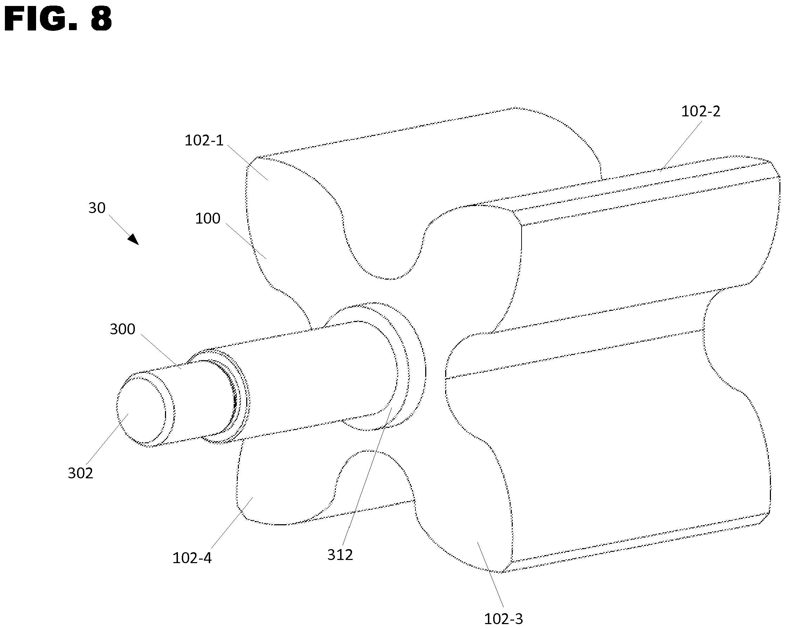

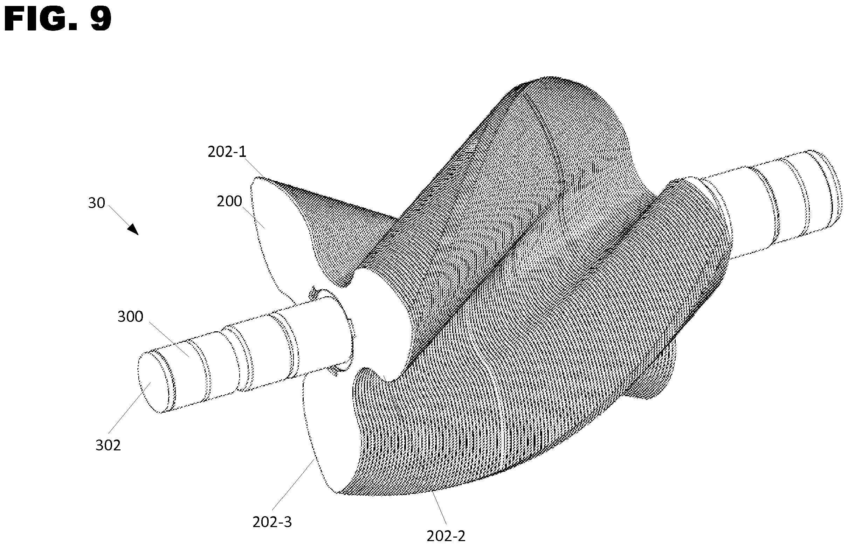

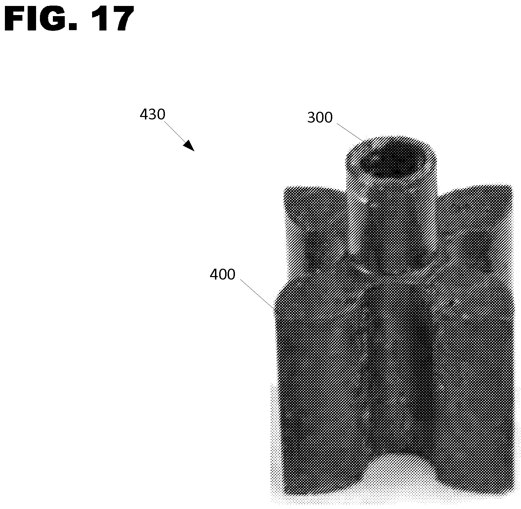

With reference to Figures 8 and 9, assembled rotors 30 using stacked rotor sheets 100 and 200, respectively, are shown. Referring to Figure 7, the laminated rotor 30 is provided as a straight stack rotor by stacking the rotor sheets 100 such that adjacent sheets 100 can completely cover each other. Figure 17 shows a similar example in which rotor plies 400 are utilized to form the rotor 430. Referring to Figure 8, laminated rotor 30 includes a plurality of stacked rotor sheets 200 that can be mounted to the common shaft 300. In the example shown, the rotor sheets 200 are rotationally stacked such that the rotor assembly 30 can have a helical rotor having either a constant helix angle or a varied helix angle (e.g. the degree of rotational offset between adjacent sheets increases and/or decreases along the length of the rotor). By use of the term "rotationally stacked," it is meant that the sheets are rotationally offset with respect to each other such that one rotor sheet does not entirely cover an adjacent rotor sheet. It is noted that sheets 100 and layers 400 can be provided in a rotational stacked configuration and that rotor sheets 200 can be provided in a straight stacked configuration as well.

### Rotor Assembly Method 1000

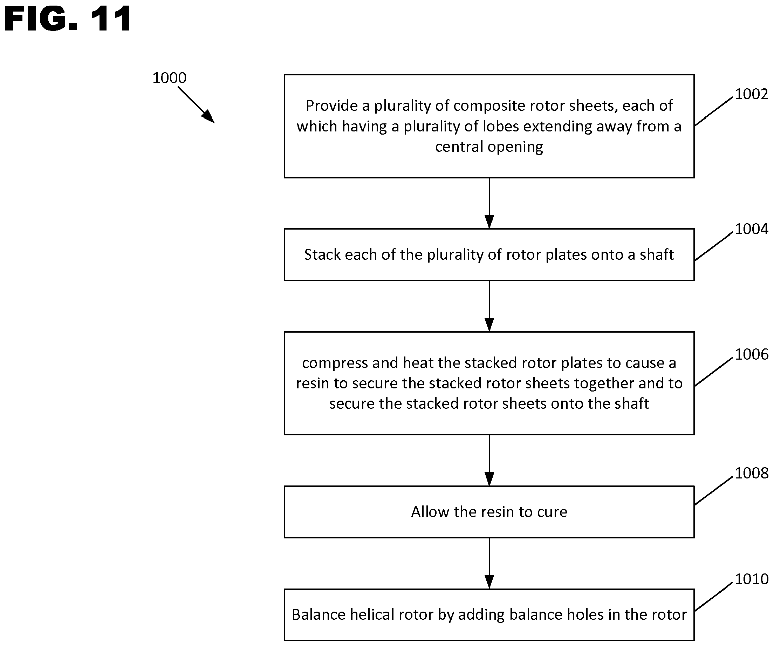

Referring to Figure 11, an example of system and process 1000 in accordance with the disclosure is presented. It is noted that although the figures diagrammatically show steps in a particular order, the described procedures are not necessarily intended to be limited to being performed in the shown order. Rather at least some of the shown steps may be performed in an overlapping manner, in a different order and/or simultaneously. Also, the process shown in Figure 11 is exemplary in nature and other steps or combinations of steps may be incorporated or altered without departing from the aspects of the present teachings disclosed herein.

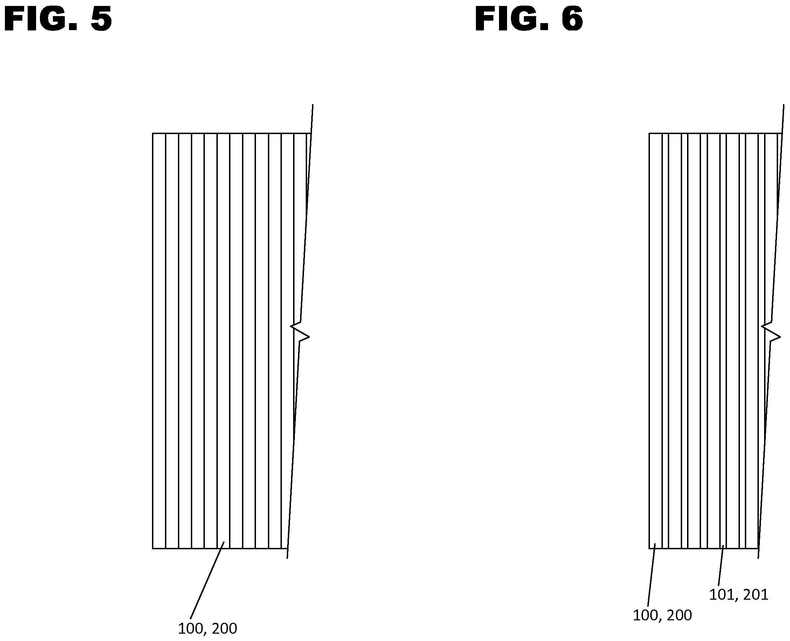

In a step 1002, a plurality of rotor sheets 100 or 200 in accordance with the present teachings are provided. In one example, the rotor sheets 100, 200 can be pre-preg carbon fiber sheets. In one example, the rotor sheets 100, 200 can be initially provided as only substrate sheets 114, 214 and can be injected with a polymeric material 116, 216 to wet the substrate sheets 114, 214. In a step 1004, each of the provided rotor sheets 100, 200 can be stacked onto the shaft 300 such that at least a portion of one of the rotor sheet sides 208, 210 is adjacent and in contact with another rotor sheet side 208, 210. In the example shown, the sides 208, 210 of each rotor sheet 200 can be completely planar such that, when stacked, no gap exists between adjacent rotor sheets. With reference to the example illustrated in Figures 5 and 8, each rotor sheet 100 can be stacked directly on top of the adjacent rotor sheet 100 or 200 to form a straight rotor 30. With reference to the example illustrated in Figure 9, each rotor sheet 200 can be slightly offset from the adjacent rotor sheet 200 about the central axis X to form a helical rotor 30. Step 1002 may alternatively include stacking the sheets 100, 200 onto a hollow hub which can then be mounted to a shaft 300. Step 1002 may also include the rotor sheets 100, 200 being stacked or formed around a pre-shaped insert, such as a foam core which can be removed after the polymeric material 116, 216 is partially or fully cured.

It can be appreciated in light of the disclosure that many configurations of stacked rotor sheets 100, 200 are possible. For example, the stack could be made entirely of hollow-lobe rotor sheets, entirely of solid-lobe rotor sheets, or a combination thereof. The stack could also include a majority of the sheets as being composite sheets with non-composite rotor plates (e.g. aluminum plates) being inserted incrementally throughout the stack, for example, every tenth sheet could be a non-composite rotor sheet with the remaining sheets being a composite rotor sheet. The stack could also include a portion of the rotor sheets 100 having chopped fibers for the fiber substrate 114 and another portion of the rotor sheets having continuous fibers, such as unidirectional or woven fibers for the fiber substrate 114. The stack could also include a portion of the rotor sheets 100 having fibers of a first orientation pattern (e.g. 0/90) for the fiber substrate 114 and another portion of the rotor sheets 100 having a second, different fiber orientation (0/+45/-45) for the fiber substrate 114. In one example, the individual rotor sheets 100, 200 can be stitched or sewn together after being stacked together.

In a step 1006, the rotor sheets 100, 200 can be compressed and can be heated to cause the rotor sheets to become into intimate contact with each other and to cause the resin 116, 206 to flow between and throughout the rotor sheets 100, 200 and into the knurls 308 and circumferential groove 310. In one example, the stacked sheets 100, 200 and shaft 300 are placed in a molding tool having a cylinder and compressed by a plunger. The molding tool may be provided with a recess for allowing the shaft 300 to extend through the tool such that both ends of the stacked sheets 100, 200 can be directly compressed between the tool and the plunger. Where a helical rotor is desired, the plunger can be configured to rotate as it compresses the rotor sheets 100, 200 which can be shown to aid in retaining the desired shape. In one example, the stacked rotor sheets 100, 200 can be subjected to a compression molding process in which about 8 to 12 tons of compression pressure is applied to the rotor sheet stack and in which the rotor sheet stack is exposed to about 320 to 325 degree Fahrenheit air for about 10 minutes.

In a step 1008, the resin 116, 206 is allowed to cure. This step can include removing the stacked sheets 100, 200 and shaft 300 from the molding tool and removing pressure and/or heat from the assembly after partial or full curing. In one example, the stacked sheets 100, 200 are removed with the shaft from the molding tool after a partial cure and moved to an oven that applies heat to the assembly for final curing.

In one example of process 1000, a net-shape or near net-shape molding approach is used meaning that little or no finishing is required after curing of the polymeric material to arrive at the final rotor shape. For example, where pre-preg carbon fiber is utilized, the outside surface of the fully cured stacked sheets 100, 200 can be substantially smooth, thereby eliminating the need to apply finishing techniques to the surface. An injection molding approach can also be utilized. However, in some examples, it may be desirable to modify the surface in some manner. For example, it may be desirable to apply an abradable coating to allow tighter clearances between a pair of adjacent rotors 30.

In a step 1010, the rotor 30 can be balanced. In one example, balancing can be performed by removing material from one or more of the lobes of the rotor sheets 100, 200. One balancing approach is to use a drill to remove a pre-selected amount of material at a pre-determined location.

### Rotor Assembly Method 2000

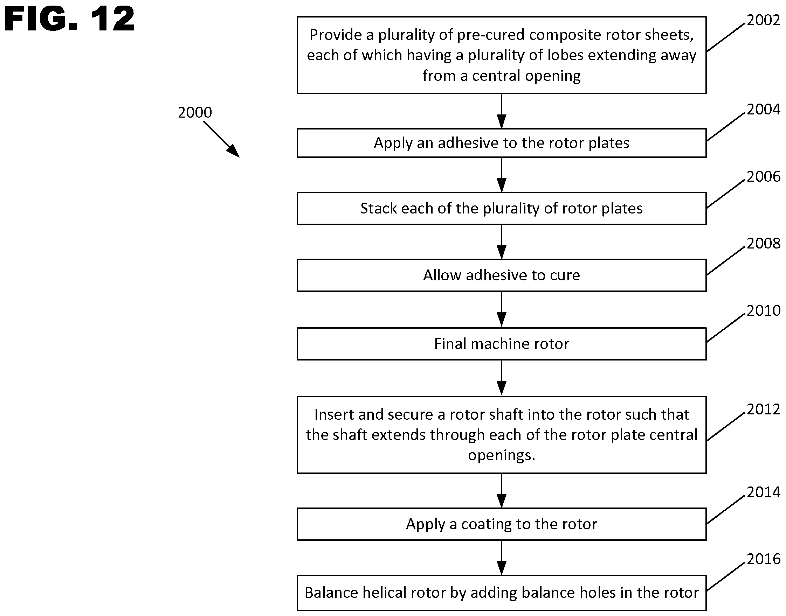

Referring to Figure 12, a second example of a rotor assembly 2000 in accordance with the present teachings is shown. It is noted that although the figures diagrammatically show steps in a particular order, the described procedures are not necessarily intended to be limited to being performed in the shown order. Rather at least some of the shown steps may be performed in an overlapping manner, in a different order and/or simultaneously. Also, the process shown in Figure 12 is exemplary in nature and other steps or combinations of steps may be incorporated or altered without departing from the aspects of the present teachings disclosed herein.

It is noted that many similarities exist between the first and second methods 1000, 2000, and the description for the first method 1000 is thus applicable to the second method 2000. Accordingly, this section will be primarily limited to the differences between the first and second methods 1000, 2000. The primary difference between the second method 2000 and the first method 1000 is the use of a separately applied adhesive 101, 201 (see Figure 6) to bond the rotor sheets 100, 200 together in the second method 2000, rather than relying on the polymeric material that is used for the composite rotor sheet itself. This approach allows for the use of pre-cured rotor sheets which can reduce and/or eliminate specialized tooling needed for prototyping and production in addition to increasing production through decreased cycle times.

In a step 2002 of the second method 2000, a plurality of pre-cured composite rotor sheets can be provided. By use of the term "pre-cured" it is meant to include composite structures in which the polymeric material is substantially or fully cured. In one example, step 2002 can include providing a pre-cured composite sheet from which a plurality of rotor sheets can be cut, for example by laser cutting, water jet cutting, and high speed stamping.

In a step 2004, an adhesive is applied to the rotor sheets. The adhesive can be applied to the rotor sheets on an individual basis or can be applied to groups of rotor sheets. The adhesive can also be applied, for example by spraying, to a pre-cured composite sheet prior to the rotor sheets being cut from the pre-cured composite sheet. The adhesive can also be provided as a coating on one or both sides of the pre-cured composite sheet. In one example, the adhesive is a polymeric material, for example a polymeric material having the same properties as already described for polymeric material 116. Non-limiting examples of adhesives are acrylic, epoxy, urethane, and ultraviolet light curable adhesives. As with the polymeric material used for the composite rotor sheets, the adhesive may be selected based on the appropriate glass transition temperature for the operating environment in which the laminated rotor is to be used.

Depending on the application and rotor sheet position, the adhesive can be applied to each side of the rotor sheet or to a single side of the rotor sheet. In one example, the rotor sheets at the end of the rotor would not have an adhesive applied to their outside faces while having adhesive applied to their inside faces. In one example, each intermediate rotor sheet can have adhesive applied to only a single side. In one example, each intermediate rotor sheet can have adhesive applied to both sides of the rotor sheet. In one example, adhesive can be applied to both sides of every other rotor sheet with the rotor sheets therebetween not coated with an adhesive. As stated previously, the bonding of the sheets with an adhesive if illustrated at Figure 6.

In a step 2006, the rotor sheets are stacked together to form the laminated rotor such that an amount of adhesive is present between each of the adjacent rotor sheets, as shown at Figure 6. As used herein, the term "adjacent" includes rotor sheets that are stacked onto each other with adhesive therebetween. As with the first method 1000, the rotor can have rotor sheets that are stacked together to form a straight rotor or a helical rotor having a constant or varied helix angle, and can have exclusively composite rotor sheets or a combination of composite and non-composite (e.g. metal) rotor sheets. It is noted that steps 2004 and 2006 can be performed alternately such that adhesive is applied to a rotor sheet which is then stacked onto the rotor before adding adhesive to the next rotor sheet to be stacked. Alternatively, all of the rotor sheets can be applied with an adhesive prior to stacking. Another suitable approach would be to first stack the rotor sheet onto the rotor and then apply adhesive to the rotor sheet after placement on the stack.

In a step 2008, the adhesive is allowed to cure. Depending upon the type of adhesive chosen, step 2008 can include heating the stacked rotor and/or compressing the stacked rotor to facilitate curing of the adhesive.

In a step 2010, the outer surfaces of the rotor can be machined to provide a specified finish, if desired. In one example, a helical rotor is formed with the rotor sheets and the edges of the stacked rotor sheets are machined to eliminate any stepped features that may be present due to the offset sheets such that a smooth outer surface is provided. This step may also be used in conjunction with the first method 1000 as well.

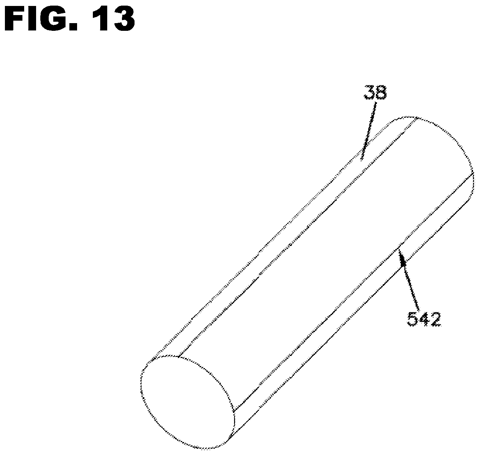

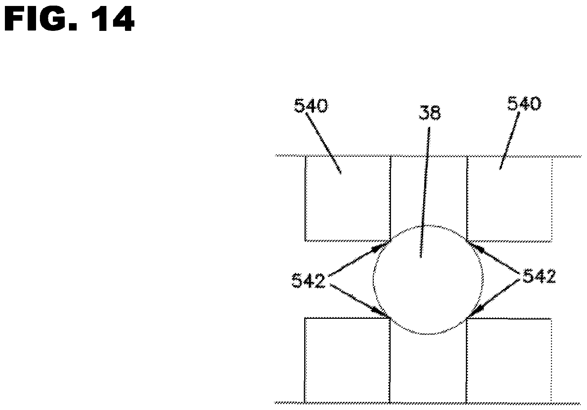

In a step 2012, a rotor shaft is inserted and secured into the rotor such that the shaft extends through each of the rotor sheet central openings. In one approach, the rotor sheets are stacked to form the rotor prior to step 2010 and the shaft is inserted into a fully assembled rotor. In another approach, the rotor sheets are stacked onto the shaft such that steps 2008 and 2010 are performed together. In one example, and as can be seen at Figures 13 and 14, the rotor shaft 38 is formed by a die set 540 to include a plurality of burrs 542 set at 90-degree increments about the output shaft 38. The height of the burrs 542 is set to interference fit with the central opening 112, 212 in the plates 100, 200 that form the rotor 30 when the shaft 38 is inserted therein. This permits power to be transferred from the rotor plates 100, 200 to the shaft 38. The rotor can also be mounted to a splined shaft and/or bonded to the shaft with a bonding agent, such as an adhesive. In one example, one end of the rotor is not rigidly attached to the shaft at one end to accommodate any thermal expansion differences between the shaft and the rotor. In one approach, a spline press fit is provided between the rotor and shaft at one end of the rotor, a relief is provided at the center of the rotor, and a slip or sliding fit is provided between the shaft and rotor at the other end of the rotor. These approaches may also be used in conjunction with the first method 1000 as well. As with the first method 1000, the rotor sheets can be mounted onto a hollow hub or can be stacked onto a hollow hub instead of a shaft.

In a step 2012, a coating can be applied to the rotor sheets of the rotor. In one example, an abradable coating is applied. Other types of coatings that may be suitable for the rotor are plasma or flame spray material if the rotor is not final machined at step 2010. Alternatively, an electrically conductive coating may be applied to the rotor.

In a step 2014, the rotor can be balanced. In one example, balancing can be performed by removing material from one or more of the lobes of the rotor sheets. One balancing approach is to use a drill to remove a pre-selected amount of material at a pre-determined location(s).

### Rotor Assembly Method 3000

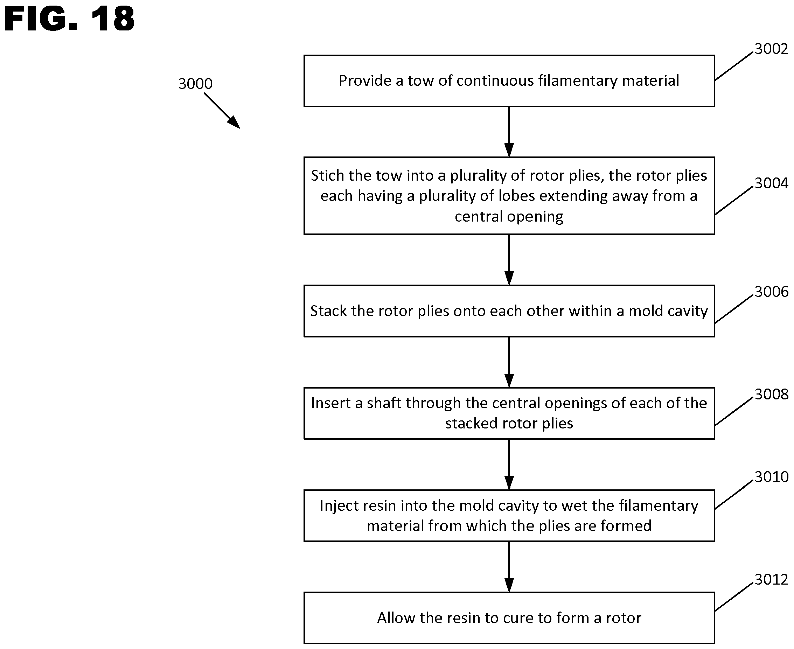

Referring to Figure 18, a third example of a rotor assembly 3000 in accordance with the present teachings is shown. It is noted that although the figures diagrammatically show steps in a particular order, the described procedures are not necessarily intended to be limited to being performed in the shown order. Rather at least some of the shown steps may be performed in an overlapping manner, in a different order and/or simultaneously. Also, the process shown in Figure 17 is exemplary in nature and other steps or combinations of steps may be incorporated or altered without departing from the aspects of the present teachings disclosed herein.

It is noted that many similarities exist between the first and third methods 1000, 3000 and the description for the first method 1000 is thus applicable to the third method 3000. Accordingly, this section will be primarily limited to the differences between the first and third methods 1000, 3000. The primary difference between the third method 3000 and the first method 1000 is that each of the rotor layers are first formed from a tow of filamentary material, such as carbon fiber, which is stitched into the shape of the rotor layer. As stated previously, this approach is advantageous in that no waste material is created when forming the individual layers or plies and in that the stitching process allows for the fibers to be optimally aligned at each location of the rotor to enhance the overall strength of the rotor.

In a step 3002 of the second method 3000, a tow of continuous filamentary material is provided. In one example, the continuous filamentary material is carbon fiber. In a step 3004, the tow is stitched into individual rotor plies, each ply having a plurality of lobes extending away from a central opening. In one example, the plies are stitched to define hollow lobes (i.e. lobes with an opening). Such an approach results in reduced rotor mass, as compared to a solid lobe structure. In one example, the tow is stitched onto a substrate, the excess of which can be subsequently trimmed away to match the shape of the rotor ply. In a step 3006, the rotor plies are staked onto each other in a mold cavity, while in a step 3008 a shaft is inserted through the aligned central openings of each of the stacked rotor plies. In a step 3010, a polymeric material is injected into the mold cavity to wet the filamentary material from which the plies are formed. One example of a suitable polymeric material is a plastic resin, for example, an epoxy resin. Some examples of thermosetting materials usable for the polymeric material 116 are vinylester, phenolic, and bismaleimide (BMI) materials. The resin application and molding process may include a resin infusion technique, such as resin transfer molding (RTM) or vacuum-assisted resin transfer molding (VARTM). Step 3010 may include compressing the stacked rotor layers 400 and the application of heat to the mold cavity. In general, the rotor layers 400 can be characterized as having a loft property, meaning that the layers 400 are generally thicker and relatively more compressible in comparison to a sheet 100, 200. Thus, some compression during molding may be desirable to consolidate the structure. In a step 3012 the resin is allowed to cure to form the rotor, as shown in Figure 17. The rotor may be removed from the cavity after full or partial curing.

### Rotary Assembly Applications

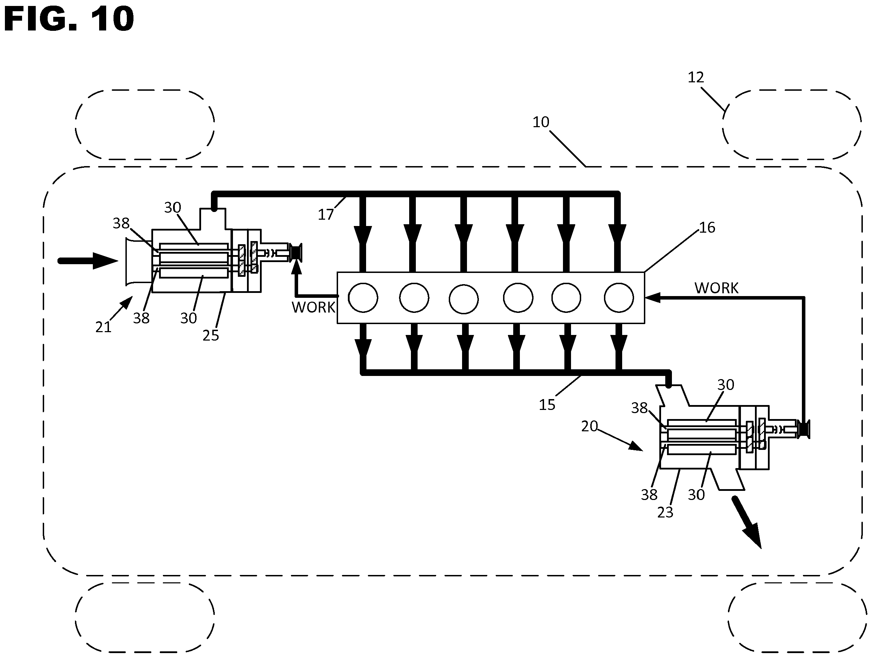

The above described rotor assembly 30, 430 (collectively rotor assembly 30) may be used in a variety of applications involving rotary devices. Two such applications can be for use in a fluid expander 20 and a compression device 21 (e.g. a supercharger), as shown in Figure 10. In one example, the fluid expander 20 and compression device 21 are volumetric devices in which the fluid within the expander 20 and compression device 21 is transported across the rotors 30 without a change in volume. Figure 10 shows the expander 20 and supercharger 21 being provided in a vehicle 10 having wheels 12 for movement along an appropriate road surface. The vehicle 10 includes a power plant 16 that receives intake air 17 and generates waste heat in the form of a high-temperature exhaust gas in exhaust 15. In one example, the power plant 16 is a fuel cell. The rotor assembly 30, 430 may also be used as a straight or helical gear (i.e. a rotary component) in a gear train, as a transmission gear, as a rotor in other types of expansion and compression devices, as an impeller in pumps, and as a rotor in mixing devices.

As shown in Figure 10, the expander 20 can receive heat from the power plant exhaust 15 and can convert the heat into useful work which can be delivered back to the power plant 16 (electrically and/or mechanically) to increase the overall operating efficiency of the power plant. As configured, the expander 20 can include housing 23 within which a pair of rotor assemblies 30 is disposed. The expander 20 having rotor assemblies 30 can be configured to receive heat from the power plant 16 directly or indirectly from the exhaust.

One example of a fluid expander 20 that directly receives exhaust gases from the power plant 16 is disclosed in Patent Cooperation Treaty (PCT) International Application Number PCT/US2013/078037 entitled EXHAUST GAS ENERGY RECOVERY SYSTEM. PCT/US2013/078037 is herein incorporated by reference in its entirety.

One example of a fluid expander 20 that indirectly receives heat from the power plant exhaust via an organic Rankine cycle is disclosed in Patent Cooperation Treaty (PCT) International Application Publication Number WO 2013/130774 entitled VOLUMETRIC ENERGY RECOVERY DEVICE AND SYSTEMS. WO 2013/130774 is incorporated herein by reference in its entirety.

Still referring to Figure 10, the compression device 21 can be shown provided with housing 25 within which a pair of rotor assemblies 30 is disposed. As configured, the compression device can be driven by the power plant 16. As configured, the compression device 21 can increase the amount of intake air 17 delivered to the power plant 16. In one example, compression device 21 can be a Roots-type blower of the type shown and described in US Patent 7,488,164 entitled OPTIMIZED HELIX ANGLE ROTORS FOR ROOTS-STYLE SUPERCHARGER. US Patent 7,488,164 is hereby incorporated by reference in its entirety.

### Material Selection

Where the rotors 30 are disposed in a housing, such as housings 23 and 25, it will be appreciated in light of the disclosure that proper consideration must be given to material selection for the rotors and the housing in order to maintain desirable clearances between the rotors and housing. For example, improper material selection can result in a rotor that expands when heated by a working fluid (e.g. engine exhaust, ethanol, water, air, etc.) into the interior wall of the housing, thereby damaging the rotor and housing. It will be appreciated in light of the disclosure that proper selection of materials having appropriate relative coefficients of thermal expansion can result in a rotor that, in the expanded state, will not contact an also expanded housing and will maintain a minimum clearance between the rotors and housing for maximum efficiency across a broader range of temperatures. Also, as the rotors are more directly exposed to the working fluid (e.g. exhaust gases or a solvent used in a Rankine cycle) and the housing can radiate heat to the exterior, the rotors can be shown to expand to a greater degree than the housing. By way of the present example, the material for the rotors that can have a coefficient of thermal expansion that is lower than a coefficient of thermal expansion of the housing.

As the composite rotors 100, 200, 400 can be provided with materials having relatively low coefficients of thermal expansion, more materials may be available for the housings 23, 25, such as magnesium and aluminum. In one example, carbon fiber rotors are used in conjunction with an aluminum or housing. As carbon fiber has a lower coefficient of thermal expansion than aluminum, both the housing and the rotors will expand, but to a degree such that each component can be shown to expand to achieve clearances that allow for maximum efficiency. Furthermore, as the fiber orientation has an effect on the growth of the rotor, the fiber orientation can be selected to further minimize clearances to increase performance and efficiency. Of course, many other possibilities exist for rotor and housing materials based on desired performance criteria.

It will also be appreciated in light of the disclosure that the plastic resin 116, 206 selected for the rotors 30, 430 could also be used for applications having low or high temperatures. For example, a standard epoxy resin may limit the operation of the rotors 30 in fluid handling applications where fluid is between about -40°C and about 150°C.

While the best modes for carrying out the many aspects of the present teachings have been described in detail, those familiar with the art to which these teachings relate will recognize various alternative aspects for practicing the present teachings that are within the scope of the appended claims.

## Claims

1. A rotor assembly (30, 430) comprising:
a. a plurality of rotor layers (100, 200, 400), each rotor layer including:
i. a first side (108, 208) and a second opposite side (110, 210);
ii. a central opening (112, 212, 412) extending between the first and second sides;
iii. a plurality of lobes (102, 202, 402) joined by root sections (104, 204, 404), each of the plurality of lobes extending away from the central opening and having a longitudinal axis (105, 205) intersecting the central opening;
b. wherein at least one rotor layer is formed from a filamentary material; and
c. a shaft (300) extending through the central opening of each of the plurality of rotor layers;
d. wherein the plurality of rotor layers is stacked together to form the rotor assembly;
**characterized in that**:
at least one rotor layer (100, 200, 400) is a rotor ply formed from a single continuous tow (414) of fibers stitched together to define the plurality of lobes (102, 202, 402), the root sections (104, 204, 404), and the central opening (112, 212, 412).

2. The rotor assembly of claim 1, wherein each of the plurality of rotor layers (100, 200, 400) is a rotor ply formed from a single continuous tow of fibers stitched together to define the plurality of lobes (102, 202, 402), the root sections (104, 204, 404), and the central opening (112, 212, 412).

3. The rotor assembly (30, 430) of claim 1, further comprising a cured resin material securing the plurality of rotor layers (100, 200, 400) together.

4. The rotor assembly (30, 430) of claim 1, wherein the tow of continuous fibers are stitched together with a stitching material.

5. The rotor assembly (30, 430) of claim 4, wherein the continuous stitching material is joined to a stitch backing material adjacent the rotor ply.

6. The rotor assembly (30, 430) of claim 4, wherein the central opening (112, 212, 412) is defined by arranging the tow (414) with a generally circular center segment and each lobe (102, 202, 402) is defined by arranging the tow with at least a first lobe segment and a second lobe segment-, wherein each lobe is further defined by arranging the tow with a third lobe segment stitched to the first lobe segment and a fourth lobe segment stitched to the second lobe segment-, wherein the tow further defines the root segments extending between the lobes, wherein each root segment is stitched to the center segment-, and wherein the fibers in the first and second lobe segments generally extend from the center segment towards a tip portion (103, 403) of each lobe, the fibers in the center segment extend generally circumferentially around the central opening, and at least a portion of the fibers in the root segments extend generally parallel to a portion of adjacent fibers in the center segment.

7. The rotor assembly (30, 430) of claim 6, wherein the fibers in the tow (414) are arranged to define three or four lobes (102, 202, 402).

8. The rotor assembly (30, 430) of claim 1, wherein the at least one rotor layer (100, 200, 400) includes a fiber substrate (114, 214) and a plastic resin (116, 216).

9. The rotor assembly (30, 430) of claim 8, wherein the fiber substrate (114, 214) of the at least one rotor layer (100, 200, 400) is a carbon fiber substrate.

10. The rotor assembly (30, 430) of claim 9, wherein the carbon fiber substrate (114, 214) of the at least one rotor layer (100, 200, 400) is pre-impregnated with the plastic resin (116, 216).

11. The rotor assembly (30, 430) of claim 10, wherein the carbon fiber substrate (114, 214) of the at least one rotor layer (100, 200, 400) has a plurality of fibers and wherein at least some of fibers are aligned generally parallel to the longitudinal axis (105, 205) of at least one of the plurality of lobes (102, 202, 402) of the at least one rotor layer.

12. The rotor assembly (30, 430) of claim 11, wherein the plurality of fibers is unwoven.

13. The rotor assembly (30, 430) of claim 8, wherein the at least one rotor layer (100, 200, 400) is formed from a pre-cured composite material.

14. The rotor assembly (30, 430) of claim 13, wherein adjacent rotor layers (100, 200, 400) are bonded together with an adhesive that is separately cured from the plastic resin (116, 216) of the at least one rotor layer.

## Patentansprüche

1. Rotoranordnung (30, 430), die Folgendes umfasst:
a. eine Vielzahl von Rotorschichten (100, 200, 400), wobei jede Rotorschicht Folgendes beinhaltet:
i. eine erste Seite (108, 208) und eine zweite, gegenüberliegende Seite (110, 210) ;
ii. eine mittlere Öffnung (112, 212, 412), die sich zwischen der ersten und zweiten Seite erstreckt;
iii. eine Vielzahl von Kolben (102, 202, 402), die durch Wurzelabschnitte (104, 204, 404) verbunden sind, wobei sich jeder der Vielzahl von Kolben von der mittleren Öffnung weg erstreckt und eine Längsachse (105, 205) aufweist, welche die mittlere Öffnung schneidet;
b. wobei mindestens eine Rotorschicht aus einem faserartigen Material ausgebildet ist; und
c. eine Welle (300), die sich durch die mittlere Öffnung von jeder der Vielzahl von Rotorschichten erstreckt;
d. wobei die Vielzahl von Rotorschichten gemeinsam gestapelt ist, um die Rotoranordnung zu bilden;
**dadurch gekennzeichnet, dass**:
mindestens eine Rotorschicht (100, 200, 400) eine Rotorlage ist, die aus einem einzelnen, kontinuierlichen Seil (414) von zusammengenähten Fasern ausgebildet ist, um die Vielzahl von Kolben (102, 202, 402), die Wurzelabschnitte (104, 204, 404) und die mittlere Öffnung (112, 212, 412) zu definieren.

2. Rotoranordnung nach Anspruch 1, wobei jede der Vielzahl von Rotorschichten (100, 200, 400) eine Rotorlage ist, die aus einem einzelnen kontinuierlichen Seil von zusammengenähten Fasern ausgebildet ist, um die Vielzahl von Kolben (102, 202, 402), die Wurzelabschnitte (104, 204, 404) und die mittlere Öffnung (112, 212, 412) zu definieren.

3. Rotoranordnung (30, 430) nach Anspruch 1, die ferner ein gehärtetes Harzmaterial umfasst, das die Vielzahl von Rotorschichten (100, 200, 400) zusammen sichert.

4. Rotoranordnung (30, 430) nach Anspruch 1, wobei das Seil von kontinuierlichen Fasern mit einem Nähmaterial zusammengenäht ist.

5. Rotoranordnung (30, 430) nach Anspruch 4, wobei das kontinuierliche Nähmaterial zu einem an die Rotorlage angrenzenden Nähträgermaterial verbunden ist.

6. Rotoranordnung (30, 430) nach Anspruch 4, wobei die mittlere Öffnung (112, 212, 412) durch Anordnen des Seils (414) mit einem allgemein kreisförmigen Mittelsegment definiert ist und jeder Kolben (102, 202, 402) durch Anordnen des Seils mit mindestens einem ersten Kolbensegment und einem zweiten Kolbensegment definiert ist, wobei jeder Kolben ferner durch Anordnen des Seils mit einem an das erste Kolbensegment angenähten dritten Kolbensegment und einem an das vierte Kolbensegment angenähten zweiten Kolbensegment definiert ist, wobei das Seil ferner die Wurzelsegmente definiert, die sich zwischen den Kolben erstrecken, wobei jedes Wurzelsegment an das mittlere Segment angenäht ist und wobei sich die Fasern in dem ersten und zweiten Kolbensegment von dem mittleren Segment allgemein in Richtung eines Spitzenabschnitts (103, 403) jedes Kolbens erstrecken, wobei sich die Fasern in dem mittleren Segment allgemein umlaufend um die mittlere Öffnung erstrecken, und sich mindestens ein Teil der Fasern in den Wurzelsegmenten allgemein parallel zu einem Teil angrenzender Fasern in dem mittleren Segment erstreckt.

7. Rotoranordnung (30, 430) nach Anspruch 6, wobei die Fasern in dem Seil (414) so angeordnet sind, dass sie drei oder vier Kolben (102, 202, 402) definieren.

8. Rotoranordnung (30, 430) nach Anspruch 1, wobei die mindestens eine Rotorschicht (100, 200, 400) ein Fasersubstrat (114, 214) und ein Kunstharz (116, 216) beinhaltet.

9. Rotoranordnung (30, 430) nach Anspruch 8, wobei das Fasersubstrat (114, 214) der mindestens einen Rotorschicht (100, 200, 400) ein Kohlenstofffasersubstrat ist.

10. Rotoranordnung (30, 430) nach Anspruch 9, wobei das Kohlenstofffasersubstrat (114, 214) der mindestens einen Rotorschicht (100, 200, 400) mit dem Kunstharz (116, 216) vorimprägniert ist.

11. Rotoranordnung (30, 430) nach Anspruch 10, wobei das Kohlenstofffasersubstrat (114, 214) der mindestens einen Rotorschicht (100, 200, 400) eine Vielzahl von Fasern aufweist und wobei mindestens einige der Fasern allgemein parallel zu der Längsachse (105, 205) von mindestens einem von der Vielzahl von Kolben (102, 202, 402) der mindestens einen Rotorschicht ausgerichtet sind.

12. Rotoranordnung (30, 430) nach Anspruch 11, wobei die Vielzahl von Fasern ungeflochten ist.

13. Rotoranordnung (30, 430) nach Anspruch 8, wobei die mindestens eine Rotorschicht (100, 200, 400) aus einem vorgehärteten Verbundstoff ausgebildet ist.

14. Rotoranordnung (30, 430) nach Anspruch 13, wobei die aneinander angrenzenden Rotorschichten (100, 200, 400) miteinander mit einem Klebstoff verbunden sind, der separat von dem Kunstharz (116, 216) der mindestens einen Rotorschicht gehärtet wird.

## Revendications

1. Ensemble de rotor (30, 430), comprenant :
a. une pluralité de couches de rotor (100, 200, 400), chaque couche de rotor comprenant :
i. un premier côté (108, 208) et un second côté (110, 210) opposé ;
ii. une ouverture centrale (112, 212, 412) s'étendant entre les premier et second côtés ;
iii. une pluralité de lobes (102, 202, 402) assemblés par des sections racines (104, 204, 404), chacun de la pluralité de lobes s'étendant à distance de l'ouverture centrale et ayant un axe longitudinal (105, 205) coupant l'ouverture centrale ;
b. dans lequel au moins une couche de rotor formée à partir d'un matériau filamentaire ; et
c. un arbre (300) s'étendant à travers l'ouverture centrale de chacune de la pluralité de couches de rotor ;
d. dans lequel la pluralité de couches de rotor sont empilées ensemble afin de former l'ensemble de rotor ;
**caractérisé en ce que** :
au moins une couche de rotor (100, 200, 400) est une épaisseur de rotor formée à partir d'un seul câble (414) continu de fibres cousues ensemble pour définir la pluralité de lobes (102, 202, 402), les sections racines (104, 204, 404) et l'ouverture centrale (112, 212, 412).

2. Ensemble de rotor selon la revendication 1, dans lequel chacune de la pluralité de couches de rotor (100, 200, 400) est une épaisseur de rotor formée à partir d'un seul câble continu de fibres cousues ensemble afin de définir la pluralité de lobes (102, 202, 402), les sections racines (104, 204, 404) et l'ouverture centrale (112, 212, 412).

3. Ensemble de rotor (30, 430) selon la revendication 1, comprenant en outre un matériau en résine durci fixant la pluralité de couches de rotor (100, 200, 400) ensemble.

4. Ensemble de rotor (30, 430) selon la revendication 1, dans lequel les câbles de fibres continues sont cousus ensemble avec un matériau de couture.

5. Ensemble de rotor (30, 430) selon la revendication 4, dans lequel le matériau de couture continu est assemblé à un matériau de renforcement de point adjacent à l'épaisseur de rotor.

6. Ensemble de rotor (30, 430) selon la revendication 4, dans lequel l'ouverture centrale (112, 212, 412) est définie en agençant le câble (414) avec un segment central généralement circulaire et chaque lobe (102, 202, 402) est défini en agençant le câble avec au moins un premier segment de lobe et un deuxième segment de lobe, dans lequel chaque lobe est en outre défini en agençant le câble avec un troisième segment de lobe cousu au premier segment de lobe et un quatrième segment de lobe cousu au deuxième segment de lobe, dans lequel le câble définit en outre des segments racines s'étendant entre les lobes, dans lequel chaque segment racine est cousu au segment central, et dans lequel les fibres dans les premier et deuxième segments de lobe s'étendent généralement à partir du segment central vers une partie de pointe (103, 403) de chaque lobe, les fibres dans le segment central s'étendent généralement de manière circonférentielle autour de l'ouverture centrale, et au moins une partie des fibres dans les segments racines s'étend généralement parallèlement à une partie des fibres adjacentes dans le segment central.

7. Ensemble de rotor (30, 430) selon la revendication 6, dans lequel les fibres dans le câble (414) sont agencées pour définir trois ou quatre lobes (102, 202, 402).

8. Ensemble de rotor (30, 430) selon la revendication 1, dans lequel la au moins une couche de rotor (100, 200, 400) comprend un substrat de fibre (114, 214) et une résine de plastique (116, 216).

9. Ensemble de rotor (30, 430) selon la revendication 8, dans lequel le substrat de fibre (114, 214) de la au moins une couche de rotor (100, 200, 400) est un substrat de fibres de carbone.

10. Ensemble de rotor (30, 430) selon la revendication 9, dans lequel le substrat de fibres de carbone (114, 214) de la au moins une couche de rotor (100, 200, 400) est préimprégnée avec la résine de plastique (116, 216).

11. Ensemble de rotor (30, 430) selon la revendication 10, dans lequel le substrat en fibres de carbone (114, 214) de la au moins une couche de rotor (100, 200, 400) a une pluralité de fibres et dans lequel au moins certaines des fibres sont alignées généralement parallèlement à l'axe longitudinal (105, 205) d'au moins l'un de la pluralité de lobes (102, 202, 402) de la au moins une couche de rotor.

12. Ensemble de rotor (30, 430) selon la revendication 11, dans lequel la pluralité de fibres sont non tissées.

13. Ensemble de rotor (30, 430) selon la revendication 8, dans lequel la au moins une couche de rotor (100, 200, 400) est formée à partir d'un matériau composite précuit.

14. Ensemble de rotor (30, 430) selon la revendication 13, dans lequel les couches de rotor (100, 200, 400) adjacentes sont reliées avec un adhésif qui est cuit séparément de la résine de plastique (116, 216) de la au moins une couche de rotor.
